# EUROPÄISCHE PATENTSCHRIFT

(11) **EP 1 387 751 B1**
(45) Veröffentlichungstag und Bekanntmachung des Hinweises auf die Patenterteilung: **12.09.2007**
(21) Anmeldenummer: 02740580.2
(22) Anmeldetag: 10.05.2002
(51) Int. Cl.: B29C 44/34

(54) **SPRITZGIESSMASCHINE UND SPRITZGIESSVERFAHREN ZUR HERSTELLUNG GESCHÄUMTER FORMTEILE**
INJECTION MOLDING MACHINE AND INJECTION MOLDING METHOD FOR PRODUCING FOAMED SHAPED PARTS
MACHINE ET PROCEDE DE MOULAGE PAR INJECTION POUR PRODUIRE DES PIECES MOULEES MOUSSEES

(30) Priorität: 11.05.2001 EP 01111504
(43) Veröffentlichungstag der Anmeldung: 11.02.2004
(73) Patentinhaber: PEGUFORM GMBH, 79268 Bötzingen (DE)
(72) Erfinder: HABIBI-NAINI, Sasan, 8486 Rikon (CH); PFANNSCHMIDT, Oliver, 52060 Aachen (DE); SCHLUMMER, Christian, 79102 Freiburg (DE)
(74) Vertreter: Patentanwälte Westphal, Mussgnug & Partner
(86) Internationale Anmeldenummer: PCT/EP2002/005142
(87) Internationale Veröffentlichungsnummer: WO 2002/092314

(56) Entgegenhaltungen:
- EP-A- 1 072 375
- PATENT ABSTRACTS OF JAPAN vol. 1995, no. 03, 28. April 1995 (1995-04-28) & JP 06 339974 A (MITSUBISHI CABLE IND LTD), 13. Dezember 1994 (1994-12-13)

## Beschreibung

Die Erfindung betrifft eine Spritzgießmaschine gemäß dem Oberbegriff des Patentanspruchs 1 und ein Spitzgießverfahren zum Herstellen geschäumter Formteile unter Verwendung eines physikalischen Treibmittels, gemäß dem Oberbegriff des Patentanspruchs 13.

Eine Spritzgießmaschine und ein Spritzgießverfahren Vergleichbarer Art ist beispielsweise aus der EP-A-1 072 375 bekannt.

Die Herstellung von Formteilen nach dem Spritzgießverfahren kann neben dem Kompaktspritzgießen auch mittels Schaumspritzgießen oder anderen Sonderverfahren erfolgen. Strukturschaumformteile haben im Gegensatz zu kompakten Bauteilen einen sandwichartigen Aufbau, d.h. eine mehr oder weniger kompakte Außenhaut und einen geschlossenzelligen Kern. Sie zeichnen sich durch günstige materialspezifische Eigenschaften aus und sind darüber hinaus wirtschaftlich interessant. So weisen Strukturformteile eine im Vergleich zu kompakten Formteilen höhere spezifische Steifigkeit durch Verlagerung der Flächenträgheitsmomente in die Randschichten des Bauteils auf. Verzugsarmut, verminderte innere Spannungen und geringe Einfallstellen erlauben eine weitgehend problemlose Herstellung von gerippten Formteilen mit Wanddickensprüngen bei hoher Maßhaltigkeit. Aufgrund des inneren Schmelzedruckes beim Aufschäumen kann auf Nachdruck verzichtet werden, so dass großflächige Formteile mit geringen Zuhaltekräften auf kleineren Maschinen produziert werden können. Die Reduktion der Dichte führt neben Einsparungen auf Seiten der Rohstoffkosten auch zur Verringerung des Bauteilgewichts. Schall- und Wärmedämmung sowie erhöhte Medienbeständigkeit runden das Eigenschaftsprofil geschäumter Bauteile ab.

Die Generierung eines Thermoplastschaumes erfolgt mit Hilfe von Treibmitteln, welche auf unterschiedliche Weise dem Polymermaterial zudosiert werden können und mit der Schmelze ein einphasiges Gemisch bilden. Analog zum konventionellen Spritzgießverfahren mit Standardmaschinentechnik wird auch hier eine zur Füllung der Werkzeugkavität erforderliche Menge Material im Plastifizieraggregat zunächst aufgeschmolzen. Das Plastifizieraggegat bzw. Einspritzaggregat einer Standardspritzgießmaschine ist durch einen Zylinder mit Düse und einem Schneckenkolben mit Rückstromsperre gekennzeichnet. Während der so genannten Plastifizierphase wird Kunststoffgranulat vom Trichter durch Rotation des Schneckenkolbens über die Rückstromsperre zur Düse hin gefördert. Durch Einbringung von Wärme über die Zylinderwand des Einspritzaggregats wird das Kunststoffmaterial aufgeschmolzen. Während der Rotation des Schneckenkolbens bewegt sich der Schneckenkolben gleichzeitig axial gegen einen definierten Staudruck in Richtung Materialtrichter und gibt so Volumen im Schneckenvorraum frei. Nach Abschluss der Dosierphase wird das im Schneckenvorraum aufdosierte Material durch den axialen Hub des Schneckenkolbens mit meist hoher Geschwindigkeit in die Werkzeugkavität eingespritzt. Ausgelöst durch den Druckabfall beim Einströmen der Schmelze in das Werkzeug bilden sich Blasen durch Expansion des Treibfluides. Eine Schaumstruktur entsteht. Durch Abkühlvorgänge bzw. Aufheizvorgänge bei Elastomeren und Duroplasten im Werkzeug wird die Schaumstruktur fixiert. Nach Ablauf der Restkühlphase bzw. Restheizphase wird das formstabile Formteil entformt und ein neuer Zyklus beginnt. Art und Menge des verwendeten Treibmittels entscheiden dabei über die erreichbaren Schaumdichten und die zur Herstellung notwendige Anlagentechnik.

Man unterscheidet grundsätzlich chemische von physikalischen Treibmitteln, wobei sich die Differenzierung weniger auf die Schauminitiierung als vielmehr auf die Art der Dosierung bezieht.

Chemische Treibmittel werden dem Polymergranulat in fester Form beigemischt und zersetzen sich bei Wärmezufuhr unter Abspaltung eines oder mehrerer Fluide, meist Stickstoff, Kohlendioxid oder Wasser. Nachteilig sind die bei der Zersetzung anfallenden Restprodukte, welche zur Degradation der Polymermatrix, Verringerung der mechanischen Eigenschaften, zu Verfärbungen im Bauteil und zur Korrosion und Verschmutzung des Werkzeugs führen können. Darüber hinaus können mit chemischen Treibmitteln aufgrund der relativ geringen Gasausbeute bei der Zersetzung nur begrenzte Aufschäumgrade erzielt werden.

Fluide, welche der Polymerschmelze direkt zudosiert werden, bezeichnet man als physikalische Treibmittel. Dies können Inertgase wie Stickstoff und Kohlendioxid, ferner Kohlenwasserstoffe wie Pentan aber auch Wasser sein. Mit physikalischen Treibmitteln lassen sich deutlich höhere Aufschäumgrade erzielen. Da keine Zersetzungsprodukte anfallen, ist weder mit Verfärbungen, noch mit einem Verlust an mechanischen Eigenschaften zu rechnen. Als Nachteil wurde in der Vergangenheit stets die aufwendige Anlagentechnik und die aufgrund der Instationarität des Spritzgießprozesses schwierige Steuerung der Dosierung angeführt.

Grundvoraussetzung für die Entstehung eines Thermoplastschaumes im Spritzgießprozess ist die Generierung eines Polymer/Treibmittel-Systems unter hohem Druck.

Das Treibfluid wird dabei mit dem niedrigviskosen Polymeren in Kontakt gebracht. Abhängig von den Prozessbedingungen finden dann Diffusionsvorgänge statt, welche zu einer Aufnahme des Treibmittels in die Schmelze führen. Nach hinreichender Zeit entsteht somit ein einphasiges Polymer/Treibmittel-System.

Bestehende Verfahren unterscheiden sich weitestgehend in der Art und Weise, wie das Treibfluid mit der Schmelze in Kontakt gebracht wird:

Eine Möglichkeit, Treibmittel im Polymer sehr gleichmäßig zu lösen, besteht in der Vorbeladung des Materials mit dem Treibfluid. Dabei wird das Polymer vor dem Verarbeitungsprozess mit Hilfe einer Hochdruckbegasungsanlage mit Kohlendioxid beladen. Das Kunststoffgranulat wird in einem Autoklaven bei Raumtemperatur mit CO₂ eines definierten Drucks beaufschlagt, wobei das Polymer aufgrund des Konzentrations- und Druckunterschieds Gas aufnimmt. Die Gaskonzentration im Polymer ist dabei u.a. eine Funktion der Begasungszeit. Nachdem die Sättigungskonzentration erreicht ist, wird der Druck auf Umgebungsdruck abgebaut und das beladene Polymer der Spritzgießmaschine über den Materialtrichter zugeführt. Das Material wird im Plastifizierzylinder aufgeschmolzen und homogenisiert, wobei das Gas infolge des Druckaufbaus entlang des Zylinders gelöst vorliegt. Bei Austritt aus der Düse schäumt das Polymer aufgrund der raschen Reduktion des Druckes auf.

Der Nachteil des Verfahrens mit Vorbeladung im Autoklaven liegt in der für die industrielle Verwendung unvorteilhaften, chargenweisen Beladung des Granulats und der fehlenden zeitlichen Flexibilität durch die kontinuierliche Diffusion des Treibmittels aus dem Polymer. Dieses Verfahren findet daher in der industriellen Praxis keine Verwendung.

Ein anderes Verfahren ermöglicht es, das Treibmittel direkt im Schneckenvorraum zuzudosieren. Grundlage dieses Verfahrens ist eine spezielle Eingasungsdüse, die zwischen Zylinder und Einspritzdüse geflanscht wird (DE-A-198 53 021). Kernstück dieser Düse ist ein aus porösem, gasdurchlässigem Sintermetall bestehender Ringspalt, den die Schmelze während des Einspritzvorgangs durchströmt. Ein im Schmelzekanal zentrierter Torpedo sorgt für die strömungstechnisch günstige Aufspaltung der Schmelze vor dem Ringspalt und die Zusammenführung ohne tote Ecken nach der Durchströmung. Statische Misch- und Scherelemente sorgen bei Bedarf für eine homogene Verteilung des Polymer-Treibmittelgemisches. Die Gaszuführung erfolgt über eine Gasdosierstation, welche massenstromgeregelt Variationen des Treibmittelanteils in der Schmelze und damit unterschiedliche Aufschäumgrade zulässt.

Eine andere Technologie basiert auf der Injektion eines physikalischen Treibmittels in den Plastifizierzylinder einer Spritzgießmaschine (EP-A-0 952 908). Das Treibmittel wird dabei über mehrere axial angeordnete Radialöffnungen im Schmelzebereich des Plastifizierzylinders injiziert. Den Öffnungen sind jeweils steuerbare Ventile vorgeschaltet, welche die Verbindung zur Treibmittelversorgung öffnen und schließen können. Eine Kaskadenregelung korreliert dann die Ventilsteuerung mit der Schneckenposition während der Dosierung, d.h. die Ventile werden sukzessive geöffnet und wieder verschlossen. Damit wird versucht, eine möglichst gleichmäßige Injektion des Treibmittels in die Schmelze zu erreichen. Lange Mischzonen sorgen anschließend für eine Homogensierung des Treibmittel/Polymer-Gemisches, welches im Idealfall vor dem Einspritzvorgang einphasig vorliegt.

Die Nachteile des Verfahrens mit Injektionsdüse bestehen in der Homogenisierung der Schmelze. Während des Einspritzvorgangs steht konsequenterweise nur die Einspritzzeit zur Verfügung, um die Schmelze mit Treibmittel zu versetzen. Unter dem Aspekt, dass bei Schaumspritzgießanwendungen im allgemeinen eine hohe Einspritzgeschwindigkeit gefordert ist, um eine große Nukleierungsdichte zu generieren, reichen diese Zeiten trotz kurzer Diffusionswege im Ringspalt unter Umständen nicht aus, um eine ausreichende und homogene Sorption zu erreichen. Die Zuführung des Treibmittels während der Dosierphase hingegen ist ebenfalls problematisch, da das volumen der sich im Ringspalt befindlichen Schmelze durch die Geometrie vorgegeben ist. Ist das Volumen des zu spritzenden Formteils nun größer als das Ringspaltvolumen, so wird das Differenzvolumen nicht mit Treibmittel versetzt und die Schaumstruktur des Formteils inhomogen. Ist das Spritzvolumen kleiner als das des Ringspalts, wird ein Teil der Masse während zwei aufeinander folgenden Dosierphasen beladen. Die ist nur dann unproblematisch, falls bereits ein Dosierzyklus ausreicht, die Schmelze mit Treibmittel im Sättigungszustand anzureichern. Statische Mischelemente bergen zusätzliche die Gefahr, bei thermisch sensiblen Materialien aufgrund der Friktionswärme durch hohe Schwerwirkung zur Schädigung des polymeren Matrix zu führen. Aufgrund des hohen Druckniveaus während des Einspritzvorgangs ist eine Dosierstation erforderlich, welche das Treibfluid entsprechend hoch verdichtet.

Bei der Verfahrensvariante mit Injektion in das Plastifizieraggregat ist in erster Linie die Notwendigkeit einer speziellen Spritzgießmaschine nachteilig. Das System der Kaskadenregelung erfordert eine Korrelation mit der Maschinensteuerung, wie sie an herkömmlichen Maschinen nicht vorgesehen ist. Da die Anreicherung der Schmelze mit Treibmittel während der Dosierphase geschieht, in deren Verlauf die Schnecke eine Axialbewegung nach hinten vollzieht, sind, um eine annähernd gleichmäßige Dosierung des Treibfluides in der Schmelze zu realisieren, mehrere Eingasungsporte mit der entsprechend aufwendigen Ventiltechnik erforderlich. Diese komplexe Anlagentechnik setzt nicht nur hohe Investitionskosten voraus. Grundsätzlich steigt mit der Komplexität der verwendeten Technik auch die Anfälligkeit für Störungen im Produktionsablauf und erhöht den Aufwand für die Wartung. Die Gewährleistung einer ausreichenden Dispergierung des Treibmittels nach der punktuellen Injektion in die Schmelze setzt ausgeprägte Mischzonen voraus, welche neben einer Sonderschnecke mit langen Mischteilen aufgrund der Schneckenlänge auch ein spezielles Aggregat vorsehen. Ferner ist zur Injektion des Treibfluides eine Dosiereinheit erforderlich.

Ein weiteres verfahren zum Schäumen von Kunststoffen sieht die Treibfluid-Injektion im Bereich eines Extruders vor (EP-A 1 072 375). Hierbei wird das Treibfluid durch einen porösen Bereich in der Schnecke des Extruders der Kunststoffschmelze zudosiert. Dieses Verfahren eignet sich damit in erster Linie für die kontinuierliche Herstellung von Kunststoffprofilen durch ein Extrusionsverfahren. Um dennoch spritzgießähnliche Anwendungen zu erlauben, ist eine Kombination eines solchen Extruders mit einer Kolbeneinspritzeinheit vorgesehen. Die Zudosierung des Treibfluids erfolgt weiterhin im Extruder. Dies bedeutet also bei Realisierung eines diskontinuierlichen Prozesses einen gesteigerten maschinenbaulichen und anlagentechnischen Aufwand sowie die Notwendigkeit einer auf die Anforderungen abgestimmten Sondermaschine.

Ausgehend von der EP 1 072 375 A2 liegt der Erfindung die Aufgabe zugrunde, ein Verfahren sowie eine Vorrichtung zur Verfügung zu stellen, ein physikalisches Treibmittel mit hoher Reproduzierbarkeit und Prozesssicherheit gleichmäßig in den Schmelzestrom einer Spritzgießmaschine einzubringen und zu verteilen, um eine homogene Polymer/Treibmittel-Lösung zu generieren und zwar unter Verwendung einer konventionellen Spritzgießmaschine.

Die Aufgabe wird erfindungsgemäß durch eine Vorrichtung mit den Merkmalen des Anspruchs 1 sowie ein Verfahren mit den Merkmalen des Anspruchs 13 gelöst vorteilhafte Weiterbildungen der Erfindung sind Gegenstand der betreffenden abhängigen Ansprüche.

Die Erfindung sieht in vorteilhafter Weise vor, dass der Schneckenkolben stromabwärts einer Meteringzone einen porösen oder permeablen Abschnitt aufweist, der über eine Treibmittelzuführeinrichtung im Schneckenschaft des Schneckenkolbens mit dem Treibmittel beaufschlagbar ist und das Treibmittel flächig in die Schmelze einbringt.

Mit Hilfe der Erfindung ist es möglich, mit nur geringen Änderungen an einer konventionellen Spritzgießmaschine physikalisch getriebene Strukturschaum-Formteile herzustellen, welche sich durch eine kompakte Außenhaut und einen geschäumten Kern auszeichnen und somit im Vergleich zu kompakten Bauteilen materialspezifische Vorteile mit Einsparungen an Gewicht, Material und damit Kosten verbinden. Desweiteren ist kein Eingriff in die Maschinensteuerung erforderlich, so dass die Investitionskosten gering sind.

Die Erfindung hat im Vergleich zum Stand der Technik folgende Vorteile:
- Geringe Investitionskosten, da keine aufwendige Spezialmaschine notwendig ist, sondern lediglich ein Austausch des Schneckenkolbens einer konventionellen Spritzgießmaschine.
- Gleichmäßige Treibmitteleinbringung aufgrund eines flächigen, axial mitwandernder und rotierender Eingasungsbereichs während der Polymerdosierung.
- Hoher Homogenisierungsgrad aufgrund intensiver Scher- und Mischvorgänge bei einer im Verlauf der Eingasung stets gleichen wirksamen Länge der Misch- und Scherzonen des Schneckenkolbens.
- Optimales Lösungsverhalten aufgrund langer Diffusionszeiten und großer Diffusionsflächen bei kleinen Diffusionswegen.
- Reproduzierbarkeit des Prozesses unabhängig vom Dosiervolumen.
- Hoher Wirkungsgrad des Treibmittels.

Dadurch, dass das Treibmittel in den porösen oder permeablen Abschnitt flächig in die Polymerschmelze eingebracht wird, ist eine gleichmäßige Treibmitteleinbringung während der Polymerdosierung möglich. Es ergibt sich ein verbessertes Lösungsverhalten aufgrund langer Diffusionszeiten und großer Diffusionsflächen bei kleinen Diffusionswegen. Außerdem ist eine hohe Reproduzierbarkeit des Spritzgießprozesses unabhängig vom Dosiervolumen und eine optimale Nutzung des Treibmittels feststellbar. Schließlich hat die Erfindung den Vorteil geringer Investitionskosten, da keine aufwendige Spezialmaschine notwendig ist, sondern lediglich ein Austausch des Schneckenkolbens der konventionellen Spritzgießmaschine. Eine verlängerte Einspritzeinheit ist ebenfalls nicht erforderlich. Es genügt eine Standardlänge der Einspritzeinheit im Bereich des 20- bis 25-fachen des Außendurchmessers des Schneckenkolbens.

Vorzugsweise ist vorgesehen, dass der Durchmesser des Schneckenkolbens im Bereich des porösen oder permeablen Abschnitts des Schneckenkolbens verringert ist. Die vergrößerte Schneckengrundtiefe ermöglicht es aufgrund des geringen Druckniveaus der Polymerschmelze im Eingasungsbereich, dass das Treibmittel direkt zugeführt werden kann, ohne dass eine Dosierstation erforderlich ist.

Vorzugsweise wird das Treibmittel dem Schneckenkolben über ein den Schneckenkolben radial umschließendes Hochdruck-Dichtungsgehäuse während der Dosierphase zugeführt. Dabei liegt das physikalische Treibmittel als Fluid vor.

Das Hochdruck-Dichtungsgehäuse erhält das Treibmittel von mindestens einer Druckflasche. Dies hat den Vorteil, dass keine Dosierstation erforderlich ist.

Das Hochdruck-Dichtungsgehäuse bewegt sich simultan mit der Axialbewegung des Schneckenkolben ohne Rotation in Axialrichtung mit. Dies ermöglicht aufgrund des flächigen, axial mitwandernden und rotierenden Eingasungsbereich während der Polymerdosierung eine gleichmäßige Treibmitteleinbringung.

Die Polymer-/Treibmittellösung wird bei einer im Verlauf der Eingasung stets gleichen wirksamen Länge von Misch- und Scherelementen des Schneckenkolbens homogenisiert. Die Injektion des Treibmittels findet während der Dosierphase statt.

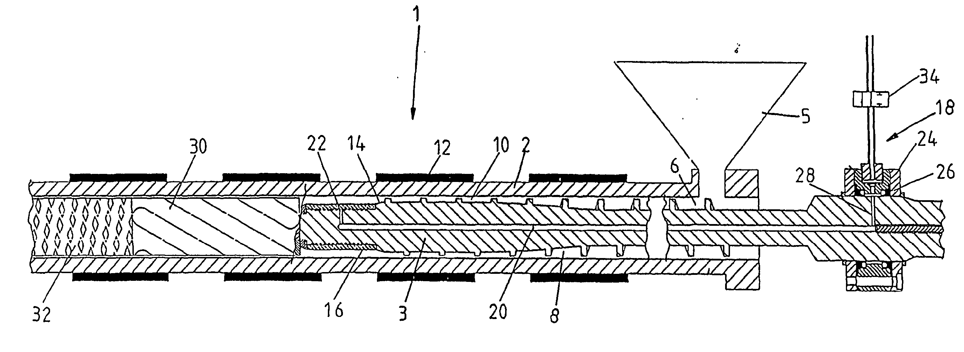

Im folgenden wird unter Bezugnahme auf die einzige Zeichnung die Erfindung näher erläutert:

Die einzige Fig. zeigt einen Schneckenkolben 2 einer Spritzgießmaschine 1 mit einem in der Einspritzeinheit 2 rotierenden und während der Einspritzphase axial bewegtem Schneckenkolben 3.

Das Polymergranulat wird über einen Materialtrichter 5 zugeführt und von dem rotierenden Schneckenkolben 3 im Bereich einer Einzugszone 6 eingezogen. Die sich anschließende Kompressionszone 8 und Meteringzone 10 bewirken unter Zuhilfenahme der externen Zylinderheizung 12 das Aufschmelzen, Komprimieren und Homogenisieren des polymeren Materials, so dass am Ende der Meteringzone 10 eine thermisch und stofflich homogene Polymerschmelze vorliegt. Am Ende 14 der Meteringzone 10 des Schneckenkolbens 3 ist der Schneckengrund sprunghaft vergrößert, d.h. der Durchmesser des Schneckenkolbens 3 ist sprunghaft verringert. In dem Bereich des verringerten Durchmessers ist ein poröser oder permeabler Abschnitt 16 des Schneckenkolbens 3 vorgesehen, der über eine Treibmittelzuführeinrichtung 18 und eine Bohrung 20 mit einem physikalischen Treibmittel beaufschlagbar ist, wobei das Treibmittel flächig in die Polymerschmelze eingebracht wird.

Der poröse oder permeable Abschnitt 16 dient als Kontaktfläche zwischen dem Treibmittel und der Polymerschmelze. Die Änderung der Grundtiefe des Schneckenkolbens führt in diesem Abschnitt 16 zu einer Druckabsenkung. Das verdichtete Treibmittel, z.B. ein Treibfluid wird über die Bohrung 20 in der Schneckenkolbenlängsachse und eine oder mehrere radiale Bohrung 22 zur Verteilung über die z.B. permeable Sintermetalloberfläche zugeführt. Die Gestaltung des porösen oder permeablen Abschnitts 16 kann beispielsweise die Form einer Hülse, eines Zylinders, eines Hohlzylinders aufweisen oder aus mindestens einem in den Schneckenkolbenschaft eingesetzten Stopfen oder Ring bestehen.

Der poröse oder permeable Abschnitt 16 kann aus Sintermetall oder aus einem anderen permeablen Material, wie z.B. Keramik gebildet sein.

Die Bohrungen 20,22 sind stromaufwärts des Eingabetrichters 5 mit einer Treibmittelzuführeinrichtung 18 verbunden. Hierzu umschließt ein Dichtungsgehäuse 24 mit einem Gehäusekern und verschraubbaren Deckel den Schneckenkolben 3.

Das Dichtungsgehäuse 24 ist zwischen einer nicht dargestellten Antriebseinrichtung für den Schneckenkolben 3 und dem Plastifizierzylinder 2 montiert und ist gegen Verdrehen gesichert. Das Dichtungsgehäuse 24 bewegt sich simultan mit der Axialbewegung des Schneckenkolbens 3. Der axiale Hub des Schneckenkolbens 3 entspricht beispielsweise dem dreifachen Durchmesser des Einspritzzylinders 2. Das Dichtungsgehäuse 24 weist spezielle Rotationsdichtungen auf und ist mit Hilfe von Gleitringen auf dem Schneckenkolbenschaft zentriert. Ein axiales Verschieben des Dichtungsgehäuses 24 wird durch mechanische Spannelemente verhindert. Als Rotationsdichtungen 26 sind Gleitringdichtungen oder Radial-Wellendichtringe einsetzbar. Eine oder mehrere radiale Bohrungen 28 verbinden den Druckraum der Treibmittelzuführeinrichtung 18 mit der axialen Bohrung 20 in der Längsachse des Schneckenkolbens 3.

Nach der Zuführung des Treibmittels über die Oberfläche des Abschnitts 16 verteilen förderwirksame Scherelemente 30, sowie Mischelemente 32 das Polymer- /Treibmittelgemisch dispersiv und distributiv. Dabei kann sowohl die Geometrie der Scherelemente 30 und der Mischelemente 32 als auch deren Reihenfolge der Anordnung abweichend von der Darstellung in der einzigen Figur sein.

Die Treibmittelzuführeinrichtung 18 erhält das Treibmittel vorzugsweise über handelsübliche Druckgasflaschen. Ein elektrisch, pneumatisch oder hydraulisch betätigtes Ventil 34 verbindet jeweils während der Dosierphase des polymeren Materials die ggf. mit Hilfe eines Druckminderventils gedrosselte Treibmittelversorgung mit dem Hochdruck-Dichtungsgehäuse 24.

## Patentansprüche

1. Spritzgießmaschine zur Herstellung geschäumter Formteile aus polymeren Materialien, insbesondere Thermoplaste, im Spritzgießverfahren durch Einbringen eines physikalischen Treibmittels in den Schmelzstrom, mit einem in einem Plastifizierzylinder (2) rotierenden Schneckenkolben (3), der einen porösen oder permeablen Abschnitt (16) aufweist, der über eine Treibmittelzuführeinrichtung (18) im Schneckenschaft des Schneckenkolbens (3) mit dem Treibmittel beaufschlagbar ist und das Treibmittel in die Schmelze einbringt,
**dadurch gekennzeichnet, dass** der Schneckenkolben (3) axial beweglich ist und der poröse oder permeable Abschnitt (16) stromabwärts einer Meteringzone (10) angeordnet ist, wobei der Schneckenkolben (3) stromabwärts des porösen oder permeablen Abschnitts (16) Scherelemente (30) und Mischelemente (32) auf dem Außenumfang des Schneckenkolbens (3) aufweist.

2. Vorrichtung nach Anspruch 1,
**dadurch gekennzeichnet, dass** der Durchmesser des Schneckenkolbens (3) im Bereich des porösen oder permeablen Abschnitts (16) verringert ist.

3. Vorrichtung nach Anspruch 1 oder 2,
**dadurch gekennzeichnet, dass** das Treibmittel dem Schneckenkolben (3) über ein den Schneckenkolben (3) radial umschließendes Hochdruck-Dichtungsgehäuse (24) während der Dosierphase zuführbar ist.

4. Vorrichtung nach einem der Ansprüche 1 bis 3,
**dadurch gekennzeichnet, dass** der Plastifizierzylinder (2) eine dem 20 bis 25-fachen Durchmesser des Schneckenkolbens (3) entsprechende Länge aufweist.

5. Vorrichtung nach einem der Ansprüche 3 oder 4,
**dadurch gekennzeichnet, dass** das Hochdruck-Dichtungsgehäuse (24) das Treibmittel von mindestens einer Druckflasche erhält.

6. Vorrichtung nach einem der Ansprüche 3 bis 5,
**dadurch gekennzeichnet, dass** das Hochdruck-Dichtungsgehäuse (24) sich simultan mit der Axialbewegung des Schneckenkolbens (3) in Axialrichtung ohne Rotation mitbewegt.

7. Vorrichtung nach einem der Ansprüche 3 bis 6,
**dadurch gekennzeichnet, dass** die Abdichtung des Hochdruck-Dichtungsgehäuses (24) gegen den rotierenden Schneckenkolben durch Rotations-Wellendichtungen (26) mit Federvorspannung erfolgt.

8. Vorrichtung nach einem der Ansprüche 3 bis 6,
**dadurch gekennzeichnet, dass** die Abdichtung des Hochdruck-Dichtungsgehäuses (24) gegen den rotierenden Schneckenkolben (3) durch Gleitringdichtungen (26) erfolgt.

9. Vorrichtung nach einem der Ansprüche 3 bis 8,
**dadurch gekennzeichnet, dass** der poröse oder permeable Abschnitt (16) eine Kontaktfläche zur Polymerschmelze im Plastifizierzylinder (2) aus einem porösen oder permeablen Werkstoff bildet.

10. Vorrichtung nach einem der Ansprüche 3 bis 9,
**dadurch gekennzeichnet, dass** der poröse oder permeable Abschnitt (16) aus einer Hülse, Zylinder, Hohlzylinder oder mindestens einem in den Schneckenschaft eingesetzten Stopfen oder Ring besteht.

11. Vorrichtung nach einem der Ansprüche 1 bis 10,
**dadurch gekennzeichnet, dass** der poröse oder permeable Abschnitt (16) aus einem porösen oder permeablen Werkstoff, z.B. Sintermetall oder einem Keramikwerkstoff, besteht.

12. Vorrichtung nach einem der Ansprüche 1 bis 11,
**dadurch gekennzeichnet, dass** der Schneckenkolben (3) eine Bohrung (20) in der Schneckenlängsachse aufweist, über die das Treibmittel dem porösen oder permeablen Abschnitt (16) zuführbar ist.

13. Spritzgießverfahren zum Herstellen geschäumter Formteile unter Verwendung physikalischer Treibmittel durch Plastifizieren eines in einem Einzugsbereich (6) eines Plastifizierzylinders (2) zugeführten Polymers, durch Zuführen eines Treibmittels in den Schmelzestrom des Polymers über einen durch einen porösen oder permeablen Abschnitt (16) eines Schneckenkolbens (3) gebildeten flächigen, rotierenden Eingasungsbereich, und durch Einspritzen der homogenisierten Polymer/Treibmittellösung in eine Form,
**dadurch gekennzeichnet, dass** die Polymer-/Treibmittellösung bei einer im Verlauf der Eingasung stets gleichen wirksamen Länge von Misch- und Scherelementen (30, 32) des Schneckenkolbens (3) homogenisiert wird, wobei der Eingasungsbereich axial mitwandernd ist.

14. Spritzgießverfahren nach Anspruch 13,
**dadurch gekennzeichnet, dass** das Treibmittel ohne Dosierstation direkt aus Druckflaschen über ein Dichtungsgehäuse (26) dem Schneckenkolben (3) zugeführt wird.

15. Spritzgießverfahren nach Anspruch 13 oder 14,
**dadurch gekennzeichnet, dass** die Injektion des Treibmittels während der Dosierphase stattfindet.

16. Spritzgießverfahren nach einem der Ansprüche 13 bis 15,
**dadurch gekennzeichnet, dass** durch Misch- und Scherelemente (30, 32) des Schneckenkolbens (3) stromabwärts des Eingasungsbereichs im weiteren Verlauf des Plastifizierzylinders (2) die Verteilung des Treibmittels in der Schmelze verbessert wird und die Diffusionswege verkürzt werden.

## Claims

1. Injection moulding machine for manufacturing foamed moulded parts out of polymeric materials, in particular thermoplastics, using the injection moulding method, by introducing a physical blowing agent into the melt flow, with a reciprocating screw (3) which rotates in a plasticizing cylinder (2) and which has a porous or permeable section (16) that can be subjected to the blowing agent via a blowing agent feed device (18) in the screw shaft of the reciprocating screw (3), and introduces the blowing agent into the molten mass,
**characterised in that** the reciprocating screw (3) is axially movable, and the porous or permeable section (16) is arranged downstream of a metering zone (10), wherein downstream of the porous or permeable section (16), the reciprocating screw (3) has shearing elements (30) and mixing elements (32) on the outer circumference of the reciprocating screw (3).

2. Apparatus as claimed in claim 1, **characterised in that** the diameter of the reciprocating screw (3) is reduced in the area of the porous or permeable section (16) of the reciprocating screw (3).

3. Apparatus as claimed in claim 1 or 2, **characterised in that** during the dosing phase, the blowing agent can be supplied to the reciprocating screw (3) via a highpressure sealing housing (24) that encompasses the reciprocating screw (3) radially.

4. Apparatus as claimed in one of the claims 1 to 3, **characterised in that** the length of the plasticizing cylinder (2) is 20 to 25 times the diameter of the reciprocating screw (3).

5. Apparatus as claimed in one of the claims 3 or 4, **characterised in that** the highpressure sealing housing (24) receives the blowing agent from at least one pressure cylinder.

6. Apparatus as claimed in one of the claims 3 to 5, **characterised in that** the highpressure sealing housing (24) moves, without rotation, in the axial direction simultaneously with the axial movement of the reciprocating screw (3).

7. Apparatus as claimed in one of the claims 3 to 6, **characterised in that** the highpressure sealing housing (24) is sealed against the rotating reciprocating screw by means of rotary shaft seals (26) with spring pre-stressing.

8. Apparatus as claimed in one of the claims 3 to 6, **characterised in that** the highpressure sealing housing (24) is sealed against the rotating reciprocating screw (3) by means of floating ring seals (26).

9. Apparatus as claimed in one of the claims 3 to 8, **characterised in that** the porous or permeable section (16) forms a surface of a porous or permeable material in contact with the polymer melt in the plasticizing cylinder (2).

10. Apparatus as claimed in one of the claims 3 to 9, **characterised in that** the porous or permeable section (16) comprises a sleeve, cylinder, hollow cylinder or at least one plug or ring deployed in the screw shaft.

11. Apparatus as claimed in one of the claims 1 to 10, **characterised in that** the porous or permeable section (16) comprises a porous or permeable material, e.g. sintered metal or a ceramic material.

12. Apparatus as claimed in one of the claims 1 to 11, **characterised in that** the reciprocating screw (3) has a bore (20) in the longitudinal axis of the screw, via which the blowing agent can be supplied to the porous or permeable section (16).

13. Injection moulding method for manufacturing foamed moulded parts using a physical blowing agent, by plasticizing a polymer introduced into a feed zone (6) of a plasticizing cylinder (2), by introducing a blowing agent into the melt flow of the polymer via a planar, rotating gas injection area formed by a porous or permeable section (16) of a reciprocating screw (3), and by injecting the homogenised polymer/blowing agent solution into a mould,
**characterised in that**
the polymer/blowing agent solution is homogenised by mixing elements and shearing elements (30, 32) of the reciprocating screw (3), exhibiting the same effective length throughout the course of gas injection, wherein the gas injection area also moves along axially.

14. Injection moulding method as claimed in claim 13, **characterised in that** the blowing agent is supplied without a dosing station to the reciprocating screw (3), directly from pressure cylinders via a sealing housing (26).

15. Injection moulding method as claimed in claim 13 or 14, **characterised in that** the injection of the blowing agent takes place during the dosing phase.

16. Injection moulding method as claimed in one of the claims 13 to 15, **characterised in that** through mixing elements and shearing elements (30, 32) of the reciprocating screw (3) downstream of the gas injection area, further on in the plasticizing cylinder (2) the distribution of the blowing agent in the molten mass is improved and the diffusion paths are shortened.

## Revendications

1. Machine d'injection pour fabriquer des pièces moulées, moussées en polymère notamment en matières thermoplastiques par un procédé d'injection introduisant un agent propulseur physique dans la veine de produit en fusion, comprenant une vis (3) en rotation dans un cylindre de plastification (2), ayant un segment poreux ou perméable (16) qui reçoit de l'agent propulseur par une conduite d'alimentation d'agent propulseur (18) dans le corps de la vis du piston-vis (3) et qui l'introduit dans le produit en fusion,
**caractérisée en ce que**
le piston-vis (3) est mobile axialement et le segment (16) poreux ou perméable est en aval d'une zone de dosage (10),
le piston-vis (3) ayant des éléments de cisaillement (30) et des éléments de mélange (32) en aval du segment poreux ou perméable (16), à la périphérie du piston-vis (3).

2. Dispositif selon la revendication 1,
**caractérisé en ce que**
le diamètre du piston-vis (3) est diminué dans la zone du segment poreux ou perméable (16)

3. Dispositif selon les revendications 1 ou 2,
**caractérisé en ce que**
l'agent propulseur est fourni au piston-vis (3) par un boîtier d'étanchéité à haute pression (24) entourant radialement le piston-vis (3), et assurant l'alimentation au cours de la phase de dosage.

4. Dispositif selon l'une des revendications 1 à 3,
**caractérisé en ce que**
le cylindre de plastification (2) a une longueur correspondante (20-25) fois le diamètre du piston-vis (3).

5. Dispositif selon l'une des revendications 3 ou 4,
**caractérisé en ce que**
le boîtier d'étanchéité à haute pression (24) reçoit l'agent propulseur d'au moins une bouteille sous pression.

6. Dispositif selon l'une des revendications 3 à 5,
**caractérisé en ce que**
le boîtier d'étanchéité à haute pression (24) se déplace simultanément avec le mouvement axial du piston-vis (3) dans la direction axiale sans rotation.

7. Dispositif selon l'une des revendications 3 à 6,
**caractérisé en ce que**
l'étanchéité du boîtier d'étanchéité à haute pression (24) vis-à-vis du piston-vis rotatif est assurée par des joints d'arbre de rotation (26) avec précontrainte de ressort.

8. Dispositif selon l'une des revendications 3 à 6,
**caractérisé en ce que**
l'étanchéité du boîtier d'étanchéité à haute pression (24) vis-à-vis du piston-vis (3) rotatif est assurée par des joints à bague de glissement (26).

9. Dispositif selon l'une des revendications 3 à 8,
**caractérisé en ce que**
le segment poreux ou perméable (16) forme une surface de contact par rapport au bain de polymère dans le cylindre de plastification (2) en une matière poreuse ou perméable.

10. Dispositif selon l'une des revendications 3 à 9,
**caractérisé en ce que**
le segment poreux ou perméable (16) est formé d'un manchon, d'un cylindre ou d'un cylindre creux ou d'au moins un bouchon ou un anneau logé dans le corps de l'arbre de vis.

11. Dispositif selon l'une des revendications 1 à 10,
**caractérisé en ce que**
le segment poreux ou perméable (16) est réalisé en une matière poreuse ou perméable, par exemple en métal fritté ou en une céramique.

12. Dispositif selon l'une des revendications 1 à 11,
**caractérisé en ce que**
le piston-vis (3) a un perçage (20) dans l'axe longitudinal de la vis par lequel l'agent propulseur est fourni au segment poreux ou perméable (16).

13. Procédé d'injection pour fabriquer une pièce moulée moussée en utilisant un agent propulseur physique, par plastification d'un polymère fourni à la zone d'entrée (6) d'un cylindre de plastification (2), par la fourniture d'un agent propulseur dans le bain en fusion de polymère par un segment (16) poreux ou perméable d'un piston-vis (3) formant une zone de gazage plate, en rotation, et en injectant la solution polymère/agent propulseur, homogénéisée, dans un moule,
**caractérisé en ce que**
la solution polymère/agent propulseur est homogénéisée au cours du gazage sur une longueur active toujours égale, d'éléments de mélange et de cisaillement (30-32) du piston-vis (13), pour être homogénéisée et la zone de gazage d'entrée se déplace axialement.

14. Procédé d'injection selon la revendication 13,
**caractérisé en ce que**
l'agent propulseur est fourni sans poste de dosage directement de bouteilles de pression par un boîtier d'étanchéité (26) au piston-vis (3).

15. Procédé d'injection selon les revendications 13 ou 14,
**caractérisé en ce que**
l'injection d'agent propulseur se fait pendant la phase de dosage.

16. Procédé d'injection selon l'une des revendications 13 à 15,
**caractérisé en ce qu'**
à l'aide d'éléments de mélange et de cisaillement (30-32) du piston-vis (3) en aval de la zone d'injection de gaz dans la suite du cylindre de plastification (2), on améliore la distribution de l'agent propulseur dans le produit en fusion et on raccourcit les chemins de diffusion.
